# EUROPEAN PATENT SPECIFICATION

(11) **EP 1 801 702 B1**
(45) Date of publication and mention of the grant of the patent: **19.08.2009**
(21) Application number: 06301201.7
(22) Date of filing: 01.12.2006
(51) Int. Cl.: G06F 13/38, H03M 9/00

(54) **Serial data transfer in a numerically controlled control system to update an output value of the control system**
Übertragung serieller Daten in einem numerisch gesteuerten Steuersystem zur Aktualisierung eines Ausgabewertes des Steuersystems
Transfert de données en série dans un système de commande commandé numériquement pour mettre à jour une valeur de sortie du système de commande

(30) Priority: 22.12.2005 EP 05112809
(43) Date of publication of application: 27.06.2007
(73) Proprietor: Thomson Licensing, 92100 Boulogne-Billancourt (FR)
(72) Inventor: Zucker, Friedhelm, 78052 Villingen-Schwenningen (DE)
(74) Representative: Kurth, Dieter

(56) References cited:
- WO-A2-01/48594
- US-A- 3 430 036
- US-A- 3 794 902
- US-A- 4 079 372

## Description

### FIELD OF THE INVENTION

The invention relates to a serial data transfer in a numerically controlled control system, in which an output value of the control system becomes updated by a serially received control word. Especially in a control system wherein changes of some bit values of the data word occur more frequently the output value of the control system becomes updated earlier and more frequently.

### BACKGROUND OF THE INVENTION

It is well known to use a shift register in a digital control device for a serial data transfer from a controller or processor to said control device especially if a small number of control lines or a small number of pins or signals for an integrated circuit shall be used. The serial data transfer is slow in comparison to a parallel one because a data word representing a control value has to be transmitted by subsequent rising edges of a clock signal shifting 1-bit data into a shift register. The complete control or data word has to be transmitted and received for an update of the output value of the control system. In cases of long data words represented by a large number of 1-bit data, the complete writing of the data word into a shift register takes a significant amount of time. On the other hand the direct digital synthesis technology provides very fast and precise control devices as e.g. a numerically controlled oscillator AD9850 manufactured by Analog Devices, which has a shift register lengths of 40 bits and allows an output frequency resolution of 0.0291 Hz with a 125 MHz reference clock applied. The output frequency can be digitally changed at a rate of up to 23 million new frequencies per second. The AD9850 comprises a 40-bit register, which can be loaded in a parallel or serial mode. In serial load mode, subsequent rising edges of a clock signal shift the 1-bit data on one pin through the 40 bits of programming information. After 40 bits are shifted through, a frequency update pulse is required to update the output frequency or phase provided by the control device. That means, where large shift registers are used, the complete writing will take a significant amount of time to update an output value of the control system.

Numerically controlled machine tools, and more particularly a backlash compensating apparatus for use with numerically controlled machine tools is already known from US-A-3 794 902 and a control systems for machine tools and more particularly a numerical point-to-point positioning control systems for machine tools is known from US-A-3 430 036.

### SUMMARY OF THE INVENTION

It is an aspect of the invention to provide an arrangement and a method for a serial data transfer in a numerically controlled control system to improve an updating of the output value in a control system in which changes of some bit values of control words occur more frequently without to leave the serial data transfer mode or to increase the clock frequency.

This object is achieved by means of the features specified in independent claims. Advantageous embodiments are specified in dependent claims.

It is an aspect of the invention to reduce the time required to update an adjusted output value in a numerical control system, which uses serial data transfer and wherein some bit values more frequently alter than other bit values. The control system uses only the three lines generally required for a serial data transmission as well as a comparable clock frequency. Especially in a digital or numerical control system wherein some bit values alter more frequently, the output value of the control system will be updated faster although a serial data transfer is used to control the output value of the control system. It is an aspect of the invention to update only the bits that need to be updated to form a new data word via a serial data transfer, to avoid that in cases where only bit values near to the input of the shift register have to be altered it has to be waited until the complete data word has been received. This is achieved by a variable write depth shift register, wherein more frequently altering bit values are arranged near to the input of the shift register and the shift register is controlled by an amended strobe signal. Instead of the well known strobe signal, which is used to enable that the output signals of a shift register after receiving a complete data word update an output value of the control system, an amended strobe signal or a so-called receive signal is used. The receive signal determines start and end of the data transfer and enables the update of the bit values of a control word, which have to be taken over. In opposite to a standard shift register, in which 1-bit data are complete shifted from the input to the end through the shift register and said shifting requires a completely transferred control word, outputs of the variable write depth shift register, which do not have to be altered in comparison to a previous received data word, keep their status according to the previous received data word. That means that in conditions where some bit values do not have to be altered in comparison to the previous control word, the corresponding bit values need not to be transferred and received again.

That means that an update of the output value of the control system can already be performed by a part of a complete data word and before all bits of a complete control word have been received. Updating the output value in a control system in which changes of some bit values occur more frequently becomes improved. Bit values, which alter more frequently are normally lower bit values and for other cases, data words are constructed in such a way that bit values, which alter more frequently occur near to the input of the shift register. In addition to the reduced time required to update the output value, the number of data bits, which has to be transferred from a data word source as e.g. a controller or processor becomes reduced and it is possible to update the output value of the control system more frequently. According to an embodiment of the invention, an arrangement of a variable write depth shift register comprises an enable shift register, which ensures that in cases, where e.g. only bits next to the input of the input shift register have to be updated that only said bit values become latched to the output of the variable write depth shift register for updating the data word and said enable shift register avoids furthermore that wrong bit values deeper in the input register, which have not been updated and may be wrong due to shifting only the bits next to the input into the shift register, occur at the output of the variable write depth shift register. Output stages for bit values, which need not to be altered keep the previous status. The write depth of the variable write depth shift register is determined by the so-called receive signal provided from a serial data source to control or update the output value or output signal of the control system. The receive signal is a binary signal, which indicates start and end of the data transfer, enables the update to the new data word at the output of the variable write depth shift register and resets the enable shift register, which counts via received clock pulses the number of received bits for an update. According to said embodiment of the invention the enable shift register is realized by a number of flip-flops and And-gates, which corresponds to the length of a complete data word and an inverter. The enable shift register and the known input shift register to receive serial data are then combined to form said variable write depth shift register.

According to a second embodiment of the invention a counter is used, which counts the number of received bits or clock pulses and enables via a decoder a corresponding number of flip-flops of a latch register for updating the data word at the output of the variable write depth shift register.

The specific nature of the invention as well as other objects, advantages, features and uses of the invention will become evident from the following description of embodiments taken in conjunction with the accompanying drawings.

### BRIEF DESCRIPTION OF PREFERRED EMBODIMENTS

The invention is explained in more detail with reference to exemplary embodiments illustrated in drawings, in which:
- Figure 1: shows a circuit diagram of a known arrangement for a serial data transfer in a numerically controlled control system to update an output value of the control system,
- Figure 2: shows a first embodiment for a circuit diagram of a variable write depth shift register for an improved serial data transfer in a numerically controlled control system to update an output value of the control system,
- Figure 3: shows a signal diagram of the binary values of a known serial data transfer in a numerically controlled control system to update an output value of the control system,
- Figure 4: shows a signal diagram of the binary values of a serial data transfer in a numerically controlled control system to update an output value of the control system with a variable write depth shift register,
- Figure 5: shows a signal diagram of the binary values of a serial data transfer in a numerically controlled control system to update an output value of the control system with a variable write depth shift register, and
- Figure 6: shows a signal diagram of the binary values of a serial data transfer in a numerically controlled control system to update an output value of the control system with a variable write depth shift register more frequently as possible by using control words having a constant length and
- Figure 7: shows a second embodiment for a circuit diagram of a variable write depth shift register for an improved serial data transfer in a numerically controlled control system to update an output value of the control system.

### DETAILED DESCRIPTION OF PREFERRED EMBODIMENTS

Like numerals and characters designate like elements throughout the figures of the drawings.

In order to keep the embodiments short and illustrative, the invention will be illustrated by comparable examples with four bit data words and a person skilled in the art will be able to apply the principle for data words having more or less bits and corresponding embodiments.

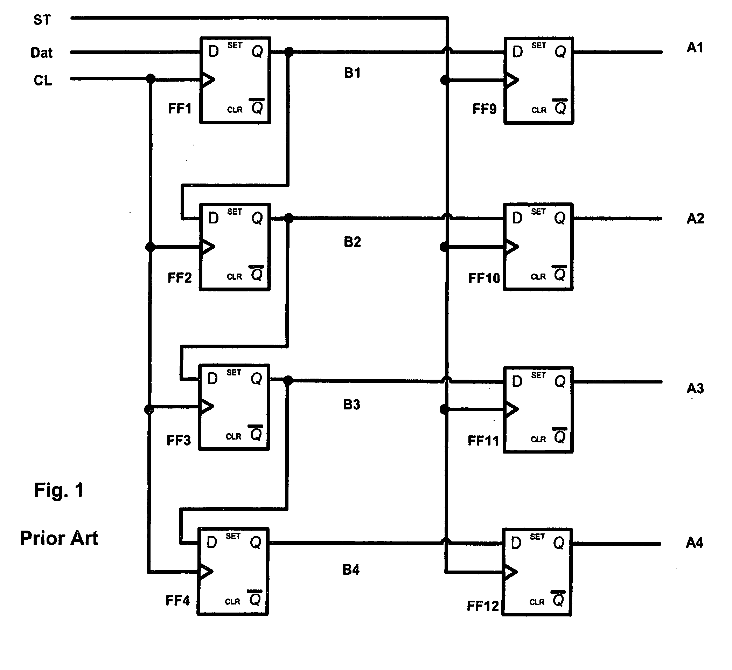

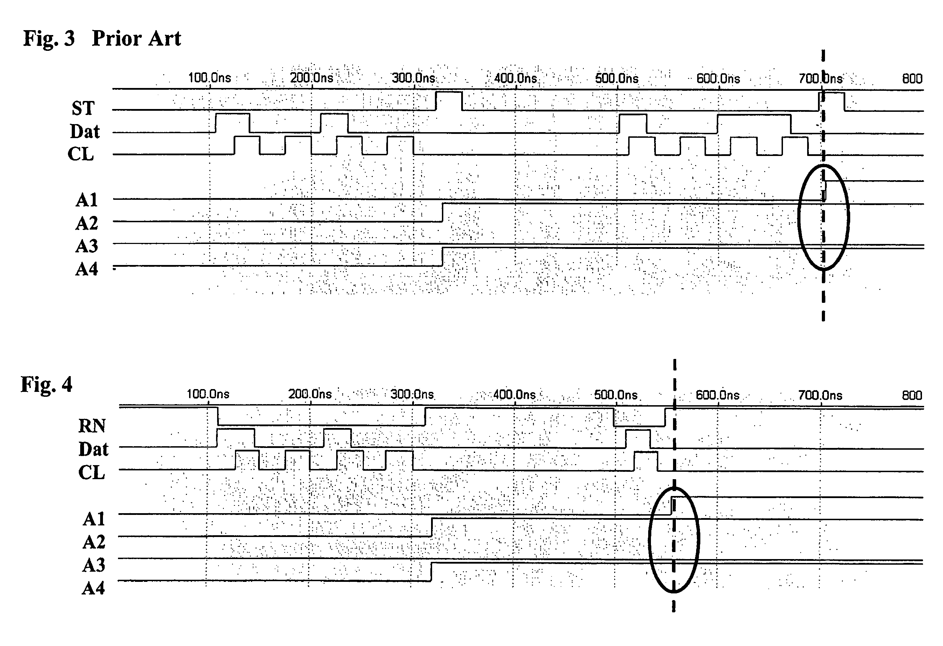

In a know numerically controlled control system, as e.g. a numerically controlled oscillator, a serial data transfer from a data word source as e.g. a controller or processor to the control device is used. The circuit diagram illustrated in Fig. 1 exemplarily shows a known serial-in/parallel-out shift register, which is used to save temporary a data word provided via serially data transfer from a not shown data source to a not shown control system. Serial-in/parallel-out shift register or so called output shift register transform serial data into parallel data and recover in such a way a data word provided from a data word source via a serial data transfer. The term register can be used in a variety of specific applications, but in all cases it refers to a group of flip-flops operating as a coherent unit to hold data. In accordance with the exemplary embodiment illustrated in Fig. 1, a known output register for a four bit data word is formed by a shift register and a so called latch register. The shift register takes a serial data stream and converts it to a parallel data bus. The serial data stream is provided by serial data bus comprising three lines, which provide a latch or so-called strobe signal ST, a data signal Dat and a clock pulse signal or clock CL. The clock pulses CL would have to be synchronized to the data signal Dat so that it toggles about in the middle of a data bit of the data signal Dat, which may be zero ore one. Every time the clock CL toggles, the data signal Dat present at the input is clocked into the first flip-flop FF1 of the input shift register. Whatever was in the first flip-flop FF1 is latched into the second one. The third one becomes equal to what the second one used to be and so on. The circuit is as shown in Fig. 1, wherein the input shift register comprises four D-flip-flop FF1 to FF4 each having an input D and a clock input illustrated by a triangle in the symbol of a flip-flop. The data signal Dat is applied to the input D of the first D-flip-flop FF1 and an output Q of each of the D-flip-flops FF1 to FF3 is connected with the input D of a next D-flip-flop FF2 to FF4. The clock inputs of the four D-flip-flop FF1 to FF4 are connected with each other and the clock signal CL is applied to said inputs. On every rising edge of the clock CL, the shift register reads the value from the data line providing the data signal Dat. The data signal Dat is fed into the serial in/parallel out shift register bit by bit, however, the four bits are all shifted out simultaneously, in parallel, as one word. This happens when all bits of a data word are fed into the input shift register. A status B1 to B4 at the outputs Q of the corresponding D-flip-flop FF1 to FF4 of the shift register represents then the data word. On a strobe signal ST from the so-called latch or strobe line, the data word is copied from the shift register to a latch register, thus data is transformed from serial into parallel data. According to Fig. 1, the latch register is formed by four D-flip-flop FF9 to FF12, whereby each input D of the D-flip-flops FF9 to FF12 is connected with an output Q of a corresponding D-flip-flop FF1 to FF4 of the input shift register and the clock inputs of the four D-flip-flop FF9 to FF12 of the latch register are connected with each other and supplied by the strobe signal ST. As the status B1 to B4 at the outputs Q of the D-flip-flops FF1 to FF4 of the input shift register alters, when the data signal Dat is shifted through it, said status B1 to B4 at the outputs Q is latched via said latch register until the next data word has been completely received and completely shifted through the input shift register. That means that a status A1 to A4 of the outputs Q of the D-flip-flops FF9 to FF12 of the latch register, which represents the bits of the data word, is kept if the serially received data signal Dat is fed into the shift register and becomes updated if a next data word has been completely received. A signal diagram of the binary values of the circuit illustrated in Fig. 1 is shown in Fig. 3. The duration, which is required until a status A1 to A4 of a data word is updated is illustrated by a time scale from 100ns to 800ns in Fig. 3. In a numerically controlled control system, wherein serially transferred four bit data words are used, the digital data signal Dat can be between 0000 and 1111, which gives 16 steps, suitable e.g. for a volume control etc.. It is assumed that a transmission of a data signal Dat corresponding to a data word 1010 starts at a time scale of 100ns as shown in Fig. 3, wherein the outermost left bit is the so-called most significant bit, which has to be shifted through to the end of the shift register. The clock pulses CL would have to be synchronized to the data signal Dat so that it toggles about in the middle of a data bit of the data signal Dat and after the four clock pulses CL for the data word have been transferred the strobe signal ST toggles for a period of about a clock pulse from zero to one for latching the transferred data word in the latch register shown in Fig.1. The status A1 to A4 of the outputs Q of the D-flip-flops FF9 to FF12 of the latch register changes with the strobe signal ST to 1010 according to the received data word 1010 so that the status A1 is equal 0, the status A2 is equal 1, the status A3 is equal 0 and the status A4 is equal 1. It is further assumed that a transmission of a following data word 1011 starts at a time scale of 500ns as shown in Fig.3, then the status A1 to A4 of the outputs Q of the D-flip-flops FF9 to FF12 of the latch register becomes updated to 1011 at a time scale of 700ns as illustrated by a vertical arranged dashed line and an ellipse, which surrounds the status A1 to A4 at that time in Fig.3. That means that although only the status A1 has to be updated an update takes place after the complete data word has been transferred and the strobe signal ST has been outputted. It is obvious that in cases of long data words represented by a large number of 1-bit data, as e.g. in the case of a numerically controlled oscillator AD9850, which has a shift register lengths of 40 bits, the complete writing of the data word into a shift register takes a significant amount of time. It is furthermore obvious that it can be expected that in such systems some bit values more frequently alter than other bit values.

It is therefore an aspect of the invention to provide an arrangement and a method for a serial data transfer in a numerically controlled control system to improve an updating of the output value.

This object is achieved in such a way that only the bits that need to be updated for a serial data transfer become transferred. At the side of the data word source as e.g. a controller or processor the content or status A1 to A4 of a previous sent data word is known and therefore it is possible to determine the bits of a current data word, which have to be updated to ensure that the current data word will be provided after serial-to-parallel conversion. That means that in a case where only the status B1 of the first flip-flop FF1 of the shift register has to be altered only the corresponding bit of the data word shall be transferred and latched by the latch register. Therefore a modified strobe signal ST, which is called receive signal RN, will be used to latch the status B1 so that the output shift register provides the updated data word by the status A1 to A4 of the latch register. Said receive signal RN will be provided via the line, which normally is used for the strobe signal ST and provided by the data word source, which generates said receive signal RN according to the number of bits, which have to be transferred for updating the data word. A signal diagram, which illustrates said method in an embodiment is shown in Fig. 4. To be compare-able with Fig. 3, it is assumed that a transmission of a data signal Dat corresponding to a data word 1010 also starts at a time scale of 100ns. In difference to the strobe signal ST in Fig. 3, the receive signal RN in Fig. 4 alters from one to zero at start of data transfer and alters from zero to one for latching the data word. The data signal Dat and the clock signal CL in Fig. 3 and Fig. 4 correspond each other. As shown in Fig. 3, only the status of the bit next to the input of the shift register and the corresponding flip-flop of the latch register have to be updated to provide the updated data word at the output of the latch register. Therefore, according to the invention only said bit of the data word and a corresponding receive signal RN is serially transferred. The altered status of the first flip-flop FF1 of the shift register is latched by the receive signal RN so that the updated data word is much earlier present at the output of the output register in comparison with the prior art serial-in, parallel-out or so-called output shift register. This is indicated by a vertical arranged dashed line and an ellipse, which surrounds the status A1 to A4, at a time scale value of about 550ns in Fig. 4. That means that in condition where some bit values have not to be altered in comparison to the previous control word the corresponding bit values need not to be transferred and received again, an update of the output value of the control system can already be performed before all bits of a complete control or data word have been received and the data word or the output value of the output shift register can be updated more frequently. Said effect increases with the length of the data words and the occurrence of bit values, which alter more frequently near to the input of the shift register. Bit values or the status of bits, which alter more frequently are normally lower bit values and for other cases, the bits of a data word can be arranged in such a way that bit values, which alter more frequently occur near to the input of the shift register. Said method is achieved by a variable write depth shift register, wherein more frequently altering bit values of a data word are arranged near to the input of the shift register and the shift register is controlled by an amended strobe signal ST, which is the so-called receive signal RN.

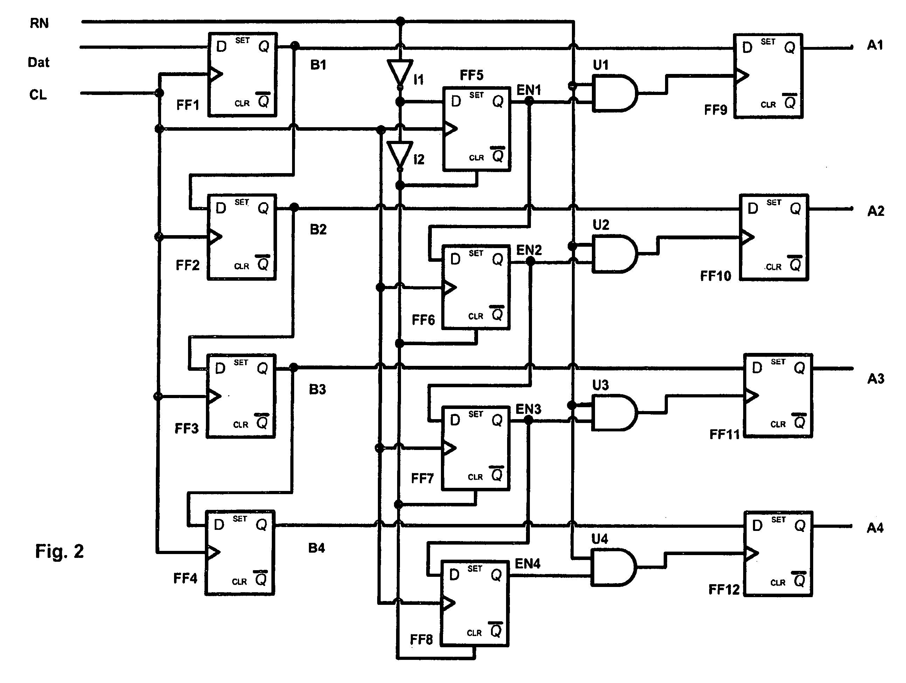

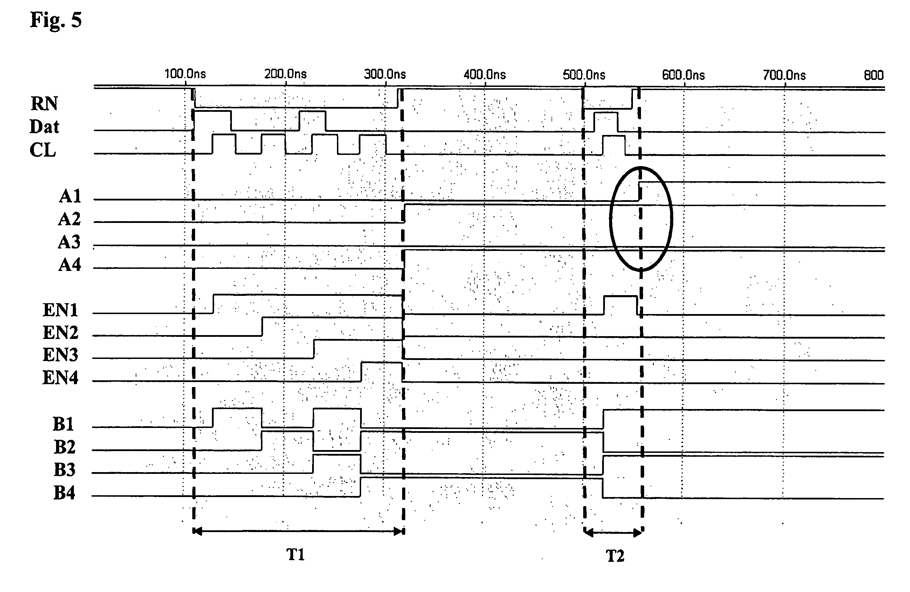

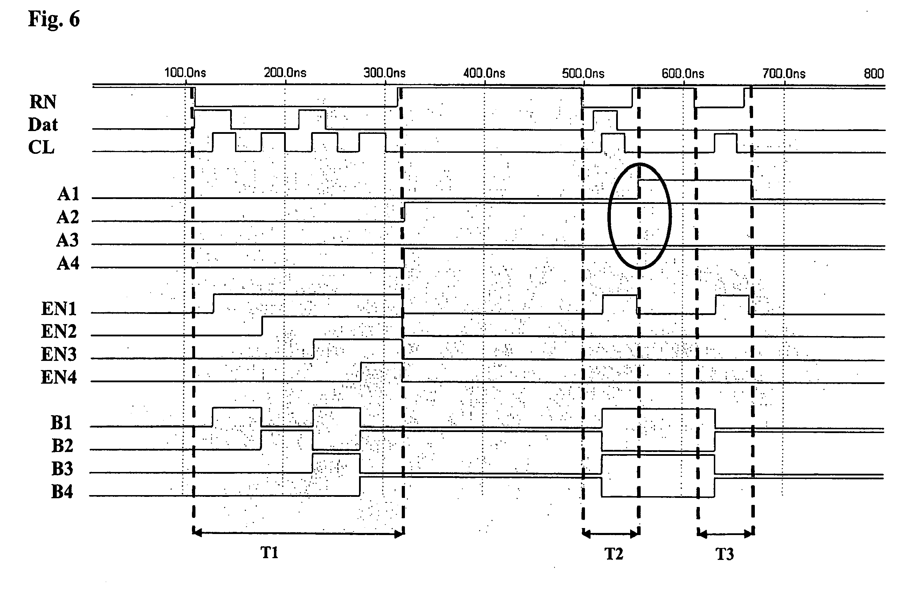

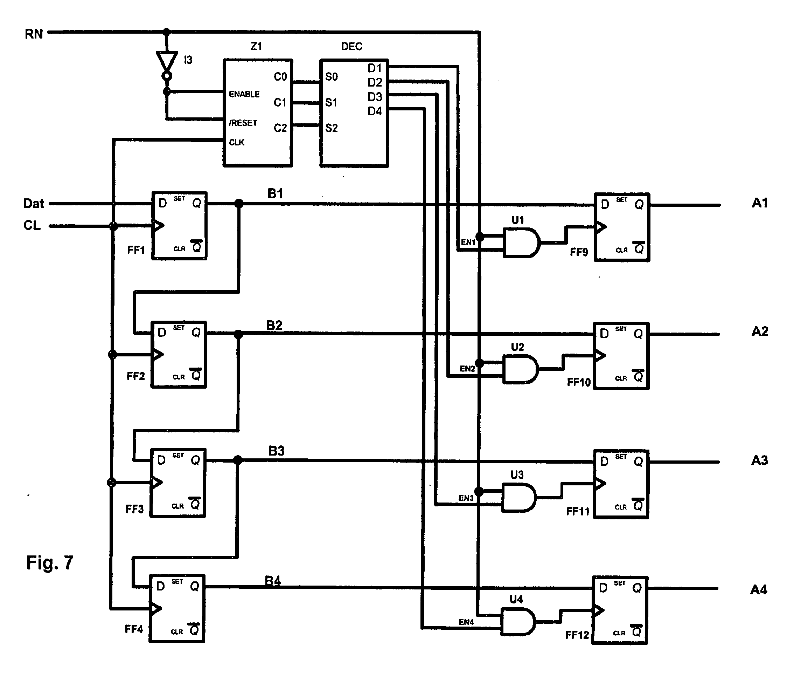

Embodiments of a variable write depth shift register are shown in Fig. 2 and Fig. 7. According to a first embodiment, shown in Fig. 2, an arrangement of a variable write depth shift register comprises in addition to a shift and a latch register an enable shift register, which controls the clock inputs of flip-flops FF9 to FF12 of the latch register. Except said clock inputs of flip-flops FF9 to FF12 of the latch register and the strobe signal ST, the circuit diagram of a variable write depth shift register corresponds to a known serial/parallel or so-called output shift register. The enable shift register inside said embodiment of the variable write depth shift register comprises a number of D-flip-flops FF5 to FF8 and And-gates U1 to U4, which corresponds to the length of a complete data word and two inverter I1 and I2. The clock inputs, the outputs Q and inputs D of the D-flip-flops FF5 to FF8 of the enable shift register are connected as known from a standard shift register, however, the input of the first D-flip-flop FF5 of the enable shift register is supplied via a first inverter I1 with the receive signal RN, which is also applied to one input of each of the And-gates U1 to U4. The other input of the And-gates U1 to U4 is connected with a corresponding output Q of a D-flip-flop FF5 to FF8 and the outputs of said And-gates U1 to U4 supply the clock inputs of the D-flip-flops FF9 to FF12 of the latch register. Furthermore, reset inputs CLR of the D-flip-flops FF5 to FF8 of the enable shift register are connected with each other and for transit time reasons supplied via a second inverter I2 applied to the output of the first inverter I1 with the receive signal RN. Said enable shift register ensures that in cases, where e.g. only the status B1 and B2 of the first D-flip-flops FF1, FF2 next to the input of the input shift register has to be updated that only said status B1 and B2 becomes latched to the output of the of the variable write depth shift register for updating the data word and said enable shift register avoids furthermore that a wrong status B3, B4 of the remaining D-flip-flops FF3, FF4, which may be caused by shifting only the bits next to the input into the shift register, occurs at the output of the variable write depth shift register. Details of the binary values of a serial data transfer in a numerically controlled control system to update an output value of the control system with a variable write depth shift register illustrates a signal diagram in Fig. 5. The signal diagram in Fig.5 is based on the same assumptions as the diagram shown in Fig. 4 and illustrates the behavior of the enable register. The serial data transfer of the data word 1010 starts from the data word source with switching the receive signal RN to zero, which causes that all And-gates U1 to U4 block a transfer of enable signals EN1 to EN4 to clock inputs of the latch register and that all D-flip-flop FF5 to FF8 are reset via its reset input CLR. Simultaneously a high level corresponding to 1 is applied to the input of the first D-flip-flop FF5 of the enable register due to said low level of the receive signal RN, which is inverted applied to said first D-flip-flop FF5 of the enable register. The D-flip-flops FF1 to FF12 are edge triggered flip-flops and the output Q of a D-flip-flop will only follow the signal applied to the input D during the instant of a clock edge of the clock signal CL. That means that the level or status of a bit of a data word as well as the signal applied to the input D of the first D-flip-flop FF5 occur at the output Q of the corresponding flip-flop with the rising edge of the clock signal CL. As shown in Fig. 5, the status of B1 and EN1, which is the status of output Q of the first D-flip-flop FF5 of the enable shift register alters to high and 1 respectively. With the next clock pulse CL the status of B1 and EN1 are shifted through the second D-flip-flops FF2 and FF6 of the input shift register and the enable shift register and the next bit status 0 of the data word is fed into the first D-flip-flop FF1 of the input shift register. The status of B1 alters to zero, the status of B2 and EN2 alters to high and the status of EN1 remains high. The third and the fourth clock pulses CL shift the corresponding status through both of the register so that with the fourth clock pulse the status B4 to B1 corresponds to the received data word 1010 and all outputs Q of the enable shift register have a status EN1 to EN4 high or enable. After receiving the data word the receive signal RN alters to high, with the result that the And-gates U1 to U4 provide a rising edge signal, which activates the latch register so that the status A1 to A4 of the outputs Q of the D-flip-flops FF9 to FF12 corresponds to the received data word. Furthermore, the altered receive signal RN resets all D-flip-flops FF5 to FF8 of the enable shift register. In that case, where also the bit of a data word alters the status, which has the biggest distance to the input of the input shift register, a duration T1 is required to update the output of the serial/parallel register. However, if the following data word is e.g. 1011 only an alteration of the status B1 of the first D-flip-flop FF1 of the input register or in that case of the lowest significant bit in comparison with the previous received data word 1010 is required. This is e.g. performed by the variable write depth shift register shown in Fig. 2. Data transfer from the not shown data source starts again with an alteration of the receive signal RN to zero and low respectively as it is illustrated at a time scale of 500ns in Fig. 5. However, as the difference to a previous sent data word is also known at the side of the data source, only the bit near to the input of the shift register, which in this case is the lowest significant bit, and a receive signal RN as well as a number of clock pulses CL, which correspond to the number of bits, which need to be sent from the data source, will be provided from said data source. The status B1 of the output Q of the first D-flip-flop FF1 of the input shift register as well as the status EN1 of the output Q of the first D-flip-flop FF5 of the enable shift register alter to high with the transmitted clock pulse CL and with an alteration of the receive signal RN to high only the status B1 of the output Q of the first D-flip-flop FF1 of the input shift register is latched to the latch register because only the status EN1 of the first D-flip-flop FF5 of the enable shift register is high. That means that by only transmitting one bit of the four bits of the data word 1011 the output of the variable write depth shift register becomes updated to the desired data word at the output of the serial/parallel shift register. The status A1 to A4 surrounded by an ellipse in Fig. 2 to Fig. 4 is the same and has been reached in a shorter time T2. Due to the fact that only one bit has been fed into the input shift register the status B1 to B4 is not consistent wit the status A1 to A4 of the latch register after the data word at the output of the serial/parallel shift register has been updated to the new data word, which is uncommon in comparison to a known serial/parallel shift register. Therefore it is of interest what happens with the irregular data word corresponding to the status B1 to B4 of the input shift register if the next data word or only partly transmitted data word arrives. The behavior is shown in Fig. 6, which is identical until a time scale value of about 550ns with the signal diagram shown in Fig. 5. It is assumed that the next data word shall be 1010. In that case also only the bit closest to the input of the input shift register alters the status B1 of the output Q of the first D-flip-flop FF1 of the input shift register and the enable shift register avoids that the status B2 to B4 of the D-flip-flops FF2 to FF4 of the input shift register, which is related to bits in the data word, which have not to be updated and are far away from the input of the input shift register confuse the data word, which shall be provided at the output of the latch register. Said update requires also only a short period of time T3, which is comparable with the duration T2. Fig. 6 illustrates in addition to the fact that the duration for updating an output value of the control system in a numerically controlled control system with serial data transfer is shortened that an update may be performed more frequently and the desired update is performed earlier or faster in comparison to a system, which transfers complete data words to update an output value of the control system in a numerically controlled control system in serial load mode as e.g. a DDS synthesizer AD9850.

In addition to the first embodiment a second embodiment of a variable write depth shift register to update an output value of the control system via three lines in serial load mode, is shown in Fig 7. The circuit diagram of a variable write depth shift register for an improved serial data transfer in a numerically controlled control system to update an output value of the control system according to the embodiment shown in Fig. 7 comprises a counter Z1 and a decoder DEC instead of the enable shift register of the first embodiment. Similar to the previous embodiment, each clock input of a D-flip-flop FF9 to FF12 of the latch register is connected to an output of an And-gate U1 to U4 and one input of each of the And-gates U1 to U4 is supplied by the above mentioned receive signal RN. The other input of each of the And-gates U1 to U4 is separately applied to an output D1 to D4 of the decoder DEC, which via its inputs S0 to S2 is connected to outputs CO to C2 of the counter Z1. The counter Z1 is enabled and disabled by the receive signal RN via an inverter I3 and counts the number of clock pulses CL during writing bits into the input shift register, which is formed by D-flip-flops FF1 to FF4. The counter Z1 is a binary counter and the decoder DEC provides output signals D1 to D4 according to the following table.

| Inputs | | | Outputs | | | |
|---|---|---|---|---|---|---|
| S2 | S1 | S0 | D4 | D3 | D2 | D1 |
| 0 | 0 | 0 | 0 | 0 | 0 | 0 |
| 0 | 0 | 1 | 0 | 0 | 0 | 1 |
| 0 | 1 | 0 | 0 | 0 | 1 | 1 |
| 0 | 1 | 1 | 0 | 1 | 1 | 1 |
| 1 | 0 | 0 | 1 | 1 | 1 | 1 |

Thereby it is ensured that similar to the first embodiment only a status B1 to B4 of the D-flip-flops FF1 to FF4 of the input register corresponding to the number of bits, which have to be altered to form the new data word are latched to the output of the latch register. That means that a variable write depth shift register simultaneously with the number of bits clocked into the input shift register enables via an enabler EN1 to EN4 the corresponding number of outputs of the latch register when the data transfer terminates and updates the data word at the output of the variable write depth shift register. Output stages of the variable write depth shift register for bit values, which need not to be altered keep the previous status.

A variable write depth shift register is used for serial data transfer in a numerically controlled control system to update an output value of the control system, wherein the write depth depends on the bit of a data word, which has to be altered and has the biggest distance to the input of an input shift register of the variable write depth shift register to provide the desired data word at the output of the variable write depth shift register. The number of bits, which have to be altered to form a current data word from a previous data word is determined at the side of the data source and start as well as end of a transfer of said bits from the source to the variable write depth shift register is indicated by a receive signal RN, which substitutes the strobe signal ST on the corresponding line. The receive signal RN is a binary signal, which indicates start and end of data transfer from the data source to the variable write depth shift register and at the end of data transfer enables the update of the data word at the output of the variable write depth shift register. The embodiments described here are specified only as examples for a four bit data word and a person skilled in the art can realize other embodiments adapted to the maximum length of the data word and the order of bits in the data word, which preferred is selected in such a way that bit values which alter more frequently are arranged near to the input of the input shift register of the variable write depth shift register. The symbols used for D-flip-flops in the drawings show a not used inverted output Q and if a connection to the input SET or input clear CLR of the D-flip-flops is not shown said inputs are disabled by a connection to an appropriate logic level. However, a person skilled in the art can realize other embodiments of the flip-flops which remain within the scope of the invention.

Although the invention has been shown and described with respect to two specific embodiments thereof, it should be understood by those skilled in the art that the foregoing and various other changes, omissions and additions in the form and detail thereof may be made therein without departing from the scope of the claims.

## Claims

1. A method for a serial data transfer in a numerically controlled control system to update an output value of the control system, wherein present data are compared with previous data before the data are supplied to a shift register (FF1 to FF4) and data are transferred if present and previous data are different, **characterized in that**
a variable write depth shift register is used to update an output value of the control system, wherein the write depth of the variable write depth shift register and the number of data bits, which has to be transferred depends on a greatest distance of a bit value in a data word (A1 to A4), which has to be altered, to the lowest significant bit in said data word (A1 to A4), to provide the updated data word (A1 to A4) at the output of the variable write depth shift register.

2. Method according to claim 1, wherein the variable write depth shift register receives only a number of bits according to a number of bits including the bit in a data word (A1 to A4), which value has to be altered being a maximum number with respect to the lowest significant bit in said data word (A1 to A4) and corresponds to the number of data bits transferred to an input shift register (FF1 to FF4) of the variable write depth shift register.

3. Method according to claim 1, wherein bits in a data word (A1 to A4) having more frequently alternating bit values are arranged near to the lowest significant bit in said data word (A1 to A4).

4. Method according to claim 1, wherein a receive signal (RN) is used to determine start and end of the serial data transfer of bits from a data source to update a data word (A1 to A4) from a previous data word (A1 to A4) and enables the update of bit values of a control word at the output of the variable write depth shift register, which have to be altered for updating the data word (A1 to A4) or output value of the control system.

5. Arrangement for a serial data transfer in a numerically controlled control system to update an output value of the control system, wherein present data are compared with previous data before the data are supplied to a shift register (FF1 to FF4) and data are transferred if present and previous data are different, comprising a variable write depth shift register for enabling a number of outputs of a latch register (FF9 to FF12) of the variable write depth shift register to be updated when a data transfer from a data source to the variable write depth shift register terminates, which corresponds to a number of received clock pulses (CL) writhing bit values into an input shift register (FF1 to FF4) of the variable write depth shift register for updating the output value or data word (A1 to A4) at the output of the variable write depth shift register from a previous output value or data word (A1 to A4) and for keeping bit values of a data word (A1 to A4) at the output of the variable write depth shift register, which do not have to be altered to provide the updated output value or data word (A1 to A4) at the output of the variable write depth shift register.

6. Arrangement according to claim 5, wherein the variable write depth shift register comprises said input shift register (FF1 to FF4), said latch register (FF9 to FF12) and an enable shift register (FF5 to FF8), which ensures that in cases, where only some bit values of a data word have to be updated to form a desired data word (A1 to A4), that only said bit values are latched via the latch register (FF9 to FF12) to the output of the variable write depth shift register for updating the data word (A1 to A4) and avoids that bit values of further stages of the input register (FF1 to FF4), which not have been updated, occur at the output of the variable write depth shift register.

7. Arrangement according to claim 5, wherein the variable write depth shift register comprises said input shift register (FF1 to FF4), said latch register (FF9 to FF12), a counter (Z1) and a decoder(DEC), which ensures that in cases, where only some bit values of a data word (A1 to A4) have to be updated to form a desired data word (A1 to A4), that only said bit values are latched via the latch register (FF9 to FF12) to the output of the variable write depth shift register for updating the data word (A1 to A4) and avoids that bit values of further stages of the input register (FF1 to FF4), which not have been updated occur at the output of the variable write depth shift register.

8. Arrangement according to claim 5, wherein the input shift register (FF1 to FF4) is a serial data receiving shift register and the latch register (FF9 to FF12) has clock inputs each connected to an output of an And gate (U1 to U4) having a fist input connected to a line providing a receive signal (RN) and a second input connected to an output of an enabler (EN1 to EN4) for latching a number of outputs of the input shift register (FF1 to FF4) to an output of the variable write depth shift register according to a number of clock pulses (CL) received to fed bit values into the input shift register (FF1 to FF4).

## Patentansprüche

1. Verfahren für eine Übertragung serieller Daten in einem numerisch gesteuerten Steuersystem zum Aktualisieren eines Ausgabewertes des Steuersystems, wobei gegenwärtige Daten mit früheren Daten verglichen werden, bevor die Daten einem Schieberegister (FF1 bis FF4) zugeführt werden, und Daten übertragen werden, wenn die gegenwärtigen und die früheren Daten unterschiedlich sind, **dadurch gekennzeichnet, dass**
ein Schieberegister mit variabler Schreibtiefe verwendet wird, um einen Ausgabewert des Steuersystems zu aktualisieren, wobei die Schreibtiefe des Schieberegisters mit variabler Schreibtiefe und die Anzahl der Datenbits, die übertragen werden müssen, von einem größten Abstand eines Bitwerts in einem Datenwort (A1 bis A4), der geändert werden muss, zu dem niedrigstwertigen Bit in dem Datenwort (A1 bis A4) abhängen, um an dem Ausgang des Schieberegisters mit variabler Schreibtiefe das aktualisierte Datenwort (A1 bis A4) bereitzustellen.

2. Verfahren gemäß Anspruch 1, bei dem das Schieberegister mit variabler Schreibtiefe nur eine Anzahl von Bits entsprechend einer Anzahl von Bits, die das Bit in einem Datenwort (A1 bis A4) einschließen, dessen Wert geändert werden muss, empfängt, wobei er eine Maximalzahl in Bezug auf das niedrigstwertige Bit in dem Datenwort (A1 bis A4) ist und der Anzahl von an ein Eingangsschieberegister (FF1 bis FF4) des Schieberegisters mit variabler Schreibtiefe übertragenen Datenbits entspricht.

3. Verfahren gemäß Anspruch 1, bei dem die Bits in einem Datenwort (A1 bis A4) mit sich häufiger ändernden Bitwerten in der Nähe des niedrigstwertigen Bit in dem Datenwort (A1 bis A4) angeordnet werden.

4. Verfahren gemäß Anspruch 1, bei dem ein Empfangssignal (RN) zum Bestimmen des Anfangs und des Endes der Übertragung serieller Daten von Bits von einer Datenquelle zum Aktualisieren eines Datenworts (A1 bis A4) von einem früheren Datenwort (A1 bis A4) verwendet wird und die Aktualisierung der Bitwerte eines Steuerworts am Ausgang des Schieberegisters mit variabler Schreibtiefe freigibt, die geändert werden müssen, um das Datenwort (A1 bis A4) oder den Ausgabewert des Steuersystems zu aktualisieren.

5. Anordnung für eine Übertragung serieller Daten in einem numerisch gesteuerten Steuersystem zum Aktualisieren eines Ausgabewertes des Steuersystems, wobei gegenwärtige Daten mit früheren Daten verglichen werden, bevor die Daten einem Schieberegister (FF1 bis FF4) zugeführt werden, und Daten übertragen werden, wenn die gegenwärtigen und die früheren Daten unterschiedlich sind, wobei die Anordnung ein Schieberegister mit variabler Schreibtiefe umfasst, um freizugeben, dass eine Anzahl von Ausgaben eines Zwischenspeicherregisters (FF9 bis FF12) des Schieberegisters mit variabler Schreibtiefe aktualisiert wird, wenn eine Übertragung von Daten von einer Datenquelle zu dem Schieberegister mit variabler Schreibtiefe endet, was einer Anzahl empfangener Taktimpulse (CL) entspricht, die Bitwerte in ein Eingangsschieberegister (FF1 bis FF4) des Schieberegisters mit variabler Schreibtiefe schreiben, um den Ausgabewert oder das Datenwort (A1 bis A4) am Ausgang des Schieberegisters mit variabler Schreibtiefe von einem früheren Ausgabewert oder Datenwort (A1 bis A4) zu aktualisieren und um die Bitwerte eines Datenworts (A1 bis A4) an dem Ausgang des Schieberegisters mit variabler Schreibtiefe, die nicht geändert zu werden brauchen, beizubehalten, um an dem Ausgang des Schieberegisters mit variabler Schreibtiefe den aktualisierten Ausgabewert oder das aktualisierte Datenwort (A1 bis A4) bereitzustellen.

6. Anordnung gemäß Anspruch 5, bei der das Schieberegister mit variabler Schreibtiefe das Eingangsschieberegister (FF1 bis FF4), das Zwischenspeicherregister (FF9 bis FF12) und ein Freigabeschieberegister (FF5 bis FF8) umfasst, was sicherstellt, dass in Fällen, in denen nur einige Bitwerte eines Datenworts aktualisiert zu werden brauchen, um ein gewünschtes Datenwort (A1 bis A4) zu bilden, nur diese Bitwerte über das Zwischenspeicherregister (FF9 bis FF12) zu dem Ausgang des Schieberegisters mit variabler Schreibtiefe zwischengespeichert werden, um das Datenwort (A1 bis A4) zu aktualisieren, und was vermeidet, dass an dem Ausgang des Schieberegisters mit variabler Schreibtiefe die Bitwerte weiterer Stufen des Eingangsregisters (FF1 bis FF4) erscheinen, die nicht aktualisiert worden sind.

7. Anordnung gemäß Anspruch 5, bei der das Schieberegister mit variabler Schreibtiefe das Eingangsschieberegister (FF1 bis FF4), das Zwischenspeicherregister (FF9 bis FF12), einen Zähler (Z1) und einen Decodierer (DEC) umfasst, was sicherstellt, dass in Fällen, in denen nur einige Bitwerte eines Datenworts (A1 bis A4) aktualisiert zu werden brauchen, um ein gewünschtes Datenwort (A1 bis A4) zu bilden, nur diese Bitwerte über das zwischenspeicherregister (FF9 bis FF12) zu dem Ausgang des Schieberegisters mit variabler Schreibtiefe zwischengespeichert werden, um das Datenwort (A1 bis A4) zu aktualisieren, und vermeidet, dass an dem Ausgang des Schieberegisters mit variabler Schreibtiefe Bitwerte weiterer Stufen des Eingangsregisters (FF1 bis FF4) erscheinen, die nicht aktualisiert worden sind.

8. Anordnung gemäß Anspruch 5, bei der das Eingangsschieberegister (FF1 bis FF4) ein serielle Daten empfangendes Schieberegister ist und das Zwischenspeicherregister (FF9 bis FF12) Takteingänge aufweist, die jeweils mit einem Ausgang eines Und-Gatters (U1 bis U4), das einen ersten Eingang aufweist, der mit einer Leitung verbunden ist, die ein Empfangssignal (RN) bereitstellt, und einen zweiten Eingang aufweist, der mit einem Ausgang einer Freigabeeinrichtung (EN1 und EN4) verbunden ist, verbunden sind, um entsprechend einer Anzahl von Taktimpulsen (CL), die empfangen werden, um Bitwerte in das Eingangsschieberegister (FF1 bis FF4) einzuspeisen, eine Anzahl von Ausgaben des Eingangsschieberegisters (FF1 bis FF4) zu einem Ausgang des Schieberegisters mit variabler Schreibtiefe (CL) zwischenzuspeichern.

## Revendications

1. Procédé de transfert de données en série dans un système de commande commandé numériquement pour mettre à jour une valeur de sortie du système de commande, où des données actuelles sont comparées à des données précédentes avant que les données ne soient fournies à un registre à décalage (FF1 à FF4) et que les données ne soient transférées si les données actuelles et précédentes sont différentes, **caractérisé en ce que**
un registre à décalage à profondeur d'écriture variable est utilisé pour mettre à jour une valeur de sortie du système de commande, où la profondeur d'écriture du registre à décalage à profondeur d'écriture variable et le nombre de bits de données devant être transféré dépendent d'une distance la plus élevée d'une valeur binaire d'un mot de données (A1 à A4), qui doit être modifié, vers le bit le moins significatif dudit mot de données (A1 à A4), de sorte à fournir le mot de données mis à jour (A1 à A4) à la sortie du registre à décalage à profondeur d'écriture variable.

2. Procédé selon la revendication 1, où le registre à décalage à profondeur d'écriture variable reçoit uniquement un certain nombre de bits selon un certain nombre de bits incluant le bit du mot de données (A1 à A4), laquelle valeur doit être modifiée pour devenir un nombre maximum par rapport au bit le moins significatif dudit mot de données (A1 à A4) et correspond au nombre de bits de données transféré à un registre à décalage d'entrée (FF1 à FF4) du registre à décalage à profondeur d'écriture variable.

3. Procédé selon la revendication 1, où des bits d'un mot de données (A1 à A4) possédant des valeurs binaires alternant plus fréquemment sont agencés à proximité du bit le moins significatif dudit mot de données (A1 à A4).

4. Procédé selon la revendication 1, où un signal de réception (RN) est utilisé pour déterminer le début et la fin du transfert de données en série de bits provenant d'une source de données pour mettre à jour un mot de données (A1 à A4) à partir d'un mot de données précédent (A1 à A4) et permet la mise à jour des valeurs binaires d'un mot de commande à la sortie du registre à décalage à profondeur d'écriture variable, qui doivent être modifiées pour mettre à jour le mot de données (A1 à A4) ou la valeur de sortie du système de commande.

5. Procédé de transfert de données en série dans un système de commande commandé numériquement pour mettre à jour une valeur de sortie du système de commande, où des données actuelles sont comparées à des données précédentes avant que les données ne soient fournies à un registre à décalage (FF1 à FF4) et que les données ne soient transférées si les données actuelles et précédentes sont différentes, comprenant un registre à décalage à profondeur d'écriture variable pour permettre à un certain nombre de sorties d'un registre de verrou (FF9 à FF12) du registre à décalage à profondeur d'écriture variable d'être mis à jour lorsqu'un transfert de données à partir d'une source de données vers le registre à décalage à profondeur d'écriture variable se termine, ce qui correspond à un certain nombre de valeurs binaires d'écriture d'impulsions d'horloge reçues (CL) dans un registre à décalage d'entrée (FF1 à FF4) du registre à décalage à profondeur d'écriture variable pour mettre à jour la valeur de sortie ou le mot de données (A1 à A4) à la sortie du registre à décalage à profondeur d'écriture variable à partir d'une valeur de sortie ou d'un mot de données (A1 à A4) précédent(e) et pour conserver des valeurs binaires d'un mot de données (A1 à A4) à la sortie du registre à décalage à profondeur d'écriture variable, qui n'ont pas besoin d'être modifiées pour fournir la valeur de sortie ou le mot de données (A1 à A4) mis(e) à jour à la sortie du registre à décalage à profondeur d'écriture variable.

6. Agencement selon la revendication 5, où le registre à décalage à profondeur d'écriture variable comprend ledit registre à décalage d'entrée (FF1 à FF4), ledit registre de verrou (FF9 à FF12) et un registre à décalage d'activation (FF5 à FF8), ce qui garantit que dans les cas où seules certaines valeurs binaires d'un mot de données doivent être mises à jour afin de former un mot de données (A1 à A4) souhaité, seules lesdites valeurs binaires sont verrouillées via le registre de verrou (FF9 à FF12) à la sortie du registre à décalage à profondeur d'écriture variable pour mettre à jour le mot de données (A1 à A4), et permet d'éviter que des valeurs binaires d'autres étages du registre d'entrée (FF1 à FF4), qui n'ont pas été mises à jour, surviennent à la sortie du registre à décalage à profondeur d'écriture variable.

7. Agencement selon la revendication 5, où le registre à décalage à profondeur d'écriture variable comprend ledit registre à décalage d'entrée (FF1 à FF4), ledit registre de verrou (FF9 à FF12), un compteur (Z1) et un décodeur (DEC), ce qui garantit que dans les cas où seules certaines valeurs binaires d'un mot de données (A1 à A4) doivent être mises à jour afin de former un mot de données (A1 à A4) souhaité, seules lesdites valeurs binaires sont verrouillées via le registre de verrou (FF9 à FF12) à la sortie du registre à décalage à profondeur d'écriture variable pour mettre à jour le mot de données (A1 à A4), et permet d'éviter que des valeurs binaires d'autres étages du registre d'entrée (FF1 à FF4), qui n'ont pas été mises à jour, surviennent à la sortie du registre à décalage à profondeur d'écriture variable.

8. Agencement selon la revendication 5, où le registre à décalage d'entrée (FF1 à FF4) est un registre à décalage de réception de données en série et le registre de verrou (FF9 à FF12) possède des entrées d'horloge connectées chacune à une sortie d'une porte Et (U1 à à U4) possédant une première entrée connectée à une ligne fournissant un signal de réception (RN) et une deuxième entrée connectée à une sortie d'un activateur (EN1 à EN4) pour verrouiller un certain nombre de sorties du registre à décalage d'entrée (FF1 à FF4) à une sortie du registre à décalage à profondeur d'écriture variable selon un certain nombre d'impulsions d'horloge (CL) reçues pour transmettre des valeurs binaires dans le registre à décalage d'entrée (FF1 à FF4).
